# EUROPEAN PATENT APPLICATION

(11) **EP 4 637 209 A1**
(43) Date of publication of application: **22.10.2025**
(21) Application number: 22968161.4
(22) Date of filing: 14.12.2022
(51) Int. Cl.: H04W 28/08, H04W 48/16, H04W 8/22, H04W 84/12

(54) **DATA FRAME TRANSMISSION METHOD, ELECTRONIC DEVICE, AND STORAGE MEDIUM**

(71) Applicant: Beijing Xiaomi Mobile Software Co., Ltd., Beijing 100085 (CN)
(72) Inventor: DONG, Xiandong, Beijing 100085 (CN)
(74) Representative: Gunzelmann, Rainer
(86) International application number: PCT/CN2022/139090
(87) International publication number: WO 2024/124451

(57) **Abstract**

Embodiments of the present disclosure relate to the technical field of mobile communications, and provide a data frame transmission method, an electronic device, and a storage medium. The data frame transmission method is applied to a station device. The method comprises: at a first moment, sending a first data frame to a first access point device (AP); and at a second moment, sending a second data frame to a second AP, wherein the first AP and the second AP maintain the same sequence number space (SNS). The embodiments of the present disclosure provide an implementation of an SNS in a multi-connection scenario, so as to support the UHR.

## Description

### FIELD

Embodiments of the present invention relate to the field of mobile communication technology, and more particularly to a method for data frame transmission, an electronic device, and a storage medium.

### BACKGROUND

With the rapid development of mobile communication technology, Wireless Fidelity (Wi-Fi) technology has made great progress in transmission rate and throughput. At present, research into the Wi-Fi technology involves the aspect of such as Ultra High Reliability (UHR), with the goal of improving the reliability of Wireless Local Area Networks (WLAN) connectivity, reducing latency, improving manageability, increasing throughput at different signal to noise ratio (SNR) levels, and reducing device-level power consumption. In addition, in UHR, in order to improve the throughput of the system, simultaneous communications in frequency bands of sub7GHz (gigahertz) as well as 45 GHz and/or 60 GHz are proposed.

In UHR, the low-latency service transmission mechanism will be further enhanced and multi-link scenarios are supported. Therefore, an implementation manner of a sequence number space (SNS) in the multi-link scenario is needed to support UHR.

### SUMMARY

Embodiments of the present invention provide a method for data frame transmission, an electronic device, and a storage medium to provide an implementation manner of SNS in a multi-link scenario to support UHR.

In an aspect, embodiments of the present invention provide a method for data frame transmission, which is applicable to a station (STA) and includes: sending a first data frame to a first access point (AP) at a first moment; and sending a second data frame to a second AP at a second moment; and the first AP and the second AP maintain the same sequence number space (SNS).

In another aspect, embodiments of the present invention further provide a method for data frame transmission, which is applicable to an access point (AP) group including a first AP and a second AP, and the method includes: receiving, by the first AP, a first data frame from a station (STA) at a first moment; and receiving, by the second AP, a second data frame from the STA at a second moment, and the first AP and the second AP maintain the same sequence number space (SNS).

In another aspect, embodiments of the present invention also provide an electronic device, which is a station (STA) and includes: a first sending module configured to send a first data frame to a first access point (AP) at a first moment; and a second sending module configured to send a second data frame to a second AP at a second moment; and the first AP and the second AP maintain the same sequence number space (SNS).

In another aspect, embodiments of the present invention also provide an electronic device, which is an access point (AP) group including a first AP and a second AP, the first AP is configured to receive a first quality of service data frame from a station (STA) at a first moment; the second AP is configured to receive a second data frame from the STA at a second moment; and the first AP and the second AP maintain the same sequence number space (SNS).

Embodiments of the present invention also provide an electronic device, which includes: a memory, a processor, and computer programs stored in the memory and executable on the processor, when the processor executes the programs, the method according to one or more of embodiments of the present invention is implemented.

Embodiments of the present invention also provide a computer-readable storage medium having stored therein computer programs that, when executed by a processor, cause the method according to one or more of embodiments of the present invention to be implemented.

In embodiments of the present invention, the STA sends the first data frame to the first AP at the first moment, and sends the second data frame to the second AP at the second moment. The first AP and the second AP maintain the same sequence number space SNS, so that when the STA sends individually addressed QoS data frames to determine the sequence numbers of the QoS data frames, whether there is data frame loss may be determined according to whether the sequence numbers of the data frames are consecutive, thereby achieving seamless data transmission.

Additional aspects and advantages of embodiments of present invention will be given in part in the following descriptions, become apparent in part from the following descriptions, or be learned from the practice of the embodiments of the present invention.

### BRIEF DESCRIPTION OF THE DRAWINGS

In order to more clearly illustrate the technical solutions of embodiments of the present invention, drawings to be used in the description of the embodiments of the present invention will be briefly introduced below. Apparently, the drawings in the following description are only some embodiments of the present invention, and other drawings can be obtained by those ordinarily skilled in the art based on these drawings without creative labor.
FIG. 1 is a first schematic flowchart of a method for data frame transmission according to embodiments of the present invention;
FIG. 2 is a first schematic diagram of a first example according to embodiments of the present invention;
FIG. 3 is a second schematic diagram of a first example according to embodiments of the present invention;
FIG. 4 is a second schematic flowchart of a method for data frame transmission according to embodiments of the present invention;
FIG. 5 is a first schematic block diagram of an electronic device according to embodiments of the present invention;
FIG. 6 is a second schematic block diagram of an electronic device according to embodiments of the present invention; and
FIG. 7 is a third schematic block diagram of an electronic device according to embodiments of the present invention.

### DETAILED DESCRIPTION

Reference will now be made in detail to illustrative embodiments of the present invention, examples of which are illustrated in the accompanying drawings. The following description refers to the accompanying drawings in which the same numbers in different drawings represent the same or similar elements unless otherwise represented. The implementations described in the following illustrative embodiments do not represent all implementations consistent with embodiments of the present invention. Instead, they are merely examples of devices and methods consistent with some aspects of the present invention as recited in the appended claims.

Terms used in embodiments of the present invention are for the purpose of describing specific embodiments, but should not be construed to limit the present invention. As used in the present invention and the appended claims, "a/an", "said" and "the" in singular forms are intended to include plural forms, unless clearly indicated in the context otherwise. It should also be understood that, the term "and/or" used herein represents and contains any one or any possible combinations of one or more associated items listed. For example, the expression "A and/or B" may represent the following three cases: A alone, B alone, and both A and B. The character "/" generally indicates an "or" relationship of the associated objects. The term "a plurality of" refers to two or more. In view of this, in embodiments of the present invention, the term "a plurality of" may be understood as "at least two".

It should be understood that, although terms such as "first," "second" and "third" may be used in the present invention for describing various information, these information should not be limited by these terms. These terms are used for distinguishing information of the same type from each other. For example, first information may also be referred to as second information, and similarly, the second information may also be referred to as the first information, without departing from the scope of the present invention. Depending on the context, the term "if" as used herein may be construed to mean "when" or "upon" or "in response to determining".

The technical solutions in the embodiments of the present invention will be clearly and completely described below with reference to the drawings of embodiments of the present invention. Apparently, the described embodiments are only part, instead all, of the embodiments of the present invention. Based on the embodiments in the present invention, all other embodiments obtained by those of ordinary skill in the art without creative work are within the protection scope of the present invention.

Embodiments of the present invention provide a method for data frame transmission, an electronic device, and a storage medium, to provide an implementation manner of the SNS in a multi-link scenario to support UHR.

The method and device are based on the same concept. Since the method and device solve the problem in a similar principle, the implementation of the device and the method can refer to each other, and the repeated parts will not be elaborated.

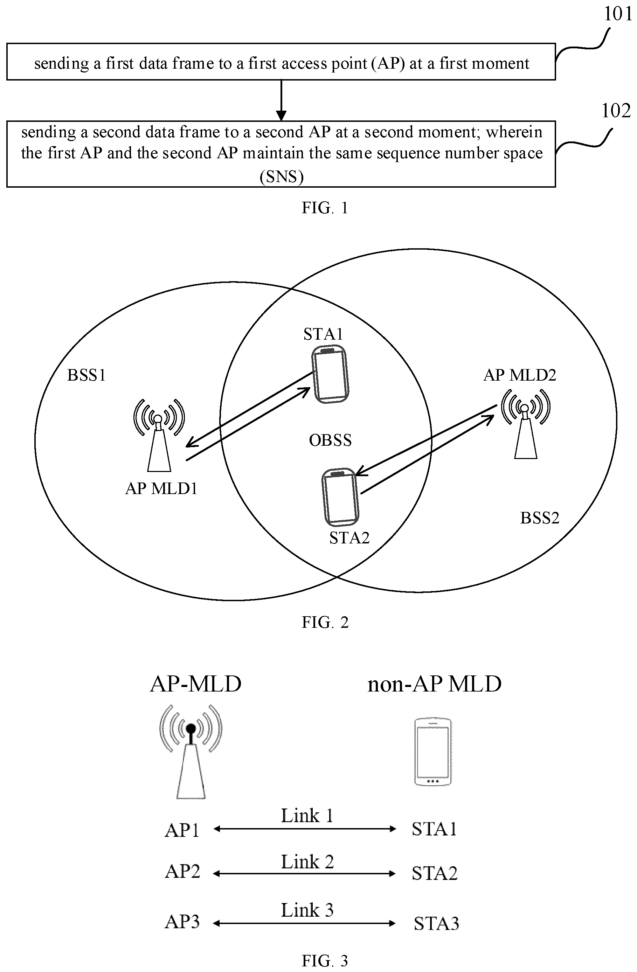

As shown in FIG. 1, embodiments of the present invention provide a method for data frame transmission. Optionally, the method may be applied to a station (STA). Optionally, in embodiments of the present invention, an access point (AP) is a device with for example a wireless to wired bridging function, and the AP is responsible for extending a service provided by the wired network to the wireless network; and a STA is an electronic device with for example a wireless network access function, providing a frame delivery service to enable information to be transmitted.

In a wireless local area network, a basic service set (BSS) may be composed of an AP and one or more stations (STAs) communicating with the AP. A basic service set may be connected to a distribution system (DS) through its AP to access another basic service set to form an extended service set (ESS). As a first example, referring to FIG. 2, AP1 and STA1 form BSS1, and AP2 and STA2 form BSS2; if the coverage ranges of two or more BSSs overlap, an overlapping basic service set (OBSS) is formed. As shown in FIG. 2, BSS1 and BSS2 overlap to form an OBSS.

Optionally, in embodiments of the present invention, AP and STA may be devices supporting multiple links, and may be represented as for example AP MLD (multi-link device) and non-AP MLD, respectively; AP MLD may represent an access point supporting a multiple-link communication function, and non-AP MLD may represent a STA supporting a multiple-link communication function.

Referring to FIG. 3, AP MLD may include three affiliated APs, such as AP1, AP2 and AP3 as shown in FIG. 3; and these APs may work on Link 1, Link 2 and Link 3, respectively. Non-AP MLD may also include three affiliated STAs, such as STA1, STA2 and STA3 as shown in FIG. 2; and STA1 works on Link 1, STA2 works on Link 2, and STA3 works on Link 3.

For ease of description, in the following, the description is made mainly with reference to an example in which an AP communicates with a STA under multiple links, however, example embodiments of the present invention are not limited thereto. In the example as shown in FIG. 3, it is assumed that AP1 communicates with STA1 through the corresponding first link, i.e., Link 1, similarly, AP2 communicates with STA2 through the corresponding second link, i.e., Link 2, and the AP communicates with STA3 through the third link, i.e., Link 3. In addition, Link 1 to Link 3 may be multiple links at different frequencies, for example, links at 2.4 GHz, 5 GHz, and 6 GHz, or several links of the same or different bandwidths at 2.4 GHz. In addition, multiple channels may exist under each link. It is understandable that the communication scenario shown in FIG. 2 is used as an example, and the concept of the present invention is not limited thereto. For example, an AP MLD may be connected to multiple (e.g., three) non-AP MLDs, or under each link, an AP may communicate with multiple other types of stations.

Referring to FIG. 1, the method may include the following steps.

In step 101, a first data frame is sent to a first access point AP at a first moment.

In step 102, a second data frame is sent to a second AP at a second moment; and the first AP and the second AP maintain the same sequence number space SNS.

The first data frame and the second data frame may be MSDUs in the aggregation of MSDUs (A-MSDU). Specifically, MSDU is a MAC service data unit (MSDU), and usually in the medium access control (MAC) layer. Based on that the first data frame and the second data frame have the same receiver address (RA), transmitter address (TA) and service type, the first data frame and the second data frame (and other MSDUs) are aggregated into a large load to form an A-MSDU, that is, multiple MSDUs are combined into a data frame, sharing a MAC header.

Optionally, the first data frame and the second data frame may be quality of service (QoS) data frames respectively. The first moment and the second moment may be the same or different.

At the first moment, the STA sends the first data frame to the first AP; at the second moment, the STA sends the second data frame to the second AP; and the first AP and the second AP may work on different links or the same link. The first AP and the second AP maintain the same sequence number space SNS, so that for data transmission between the STA and multiple APs, one SNS is used, and sequence numbers of addressed data frames are SNs in the same sequence number space, which ensures the orderly transmission of data frames in the multi-link communication scenario.

For example, in a scenario where the STA switches communication from the first AP to the second AP, for example, when a communication state between the STA and its associated AP changes, the STA may switch the communication to another AP, so that data transmission is uninterrupted. The first AP and the second AP maintain the same sequence number space SNS, so that when the STA sends individually addressed data frames to determine sequence numbers (SNs) of the data frames, whether the SNs are consecutive may be determined according to the SNs of the data frames on links where the two APs work respectively, thereby avoiding the loss of data frames during the switching process and achieving seamless data connection.

It may be understood that in embodiments of the present invention, the AP may be an AP MLD; for ease of description, the following description is made with reference to AP, which however does not constitute a limitation to embodiments of the present invention.

Specifically, still taking the switching process as an example, the STA sends a first QoS data frame to the first AP, and sends a second QoS data frame to the second AP at the same time; the first QoS data frame and the second QoS data frame have the same RA, TA and service type. The STA determines the sequence number 1 of the first QoS data frame and the sequence number 2 of the second QoS data frame, and the first AP and the second AP maintain the same sequence number space SNS. In this way, when addressing, based on the same SNS, the sequence number 1 and the sequence number 2 determined on the two links are consecutive, then it is determined that there is no data frame loss during the switching process, and the STA successfully switches the communication from the first AP to the second AP. On the contrary, if the determined sequence number 1 and sequence number 2 are not consecutive, it is determined that there is data frame loss during the switching process.

In embodiments of the present invention, the STA sends the first data frame to the first AP at the first moment, and sends the second data frame to the second AP at the second moment. The first AP and the second AP maintain the same sequence number space SNS, so that when the STA sends individually addressed QoS data frames to determine the sequence numbers of the QoS data frames, whether there is data frame loss may be determined according to whether the sequence numbers of the data frames are consecutive, thereby achieving seamless data transmission. Embodiments of the present invention provide an implementation manner of the SNS in the multi-link scenario to support UHR.

Embodiments of the present invention provide a method for data frame transmission, which is applicable to a station and includes: sending a first data frame to a first AP at a first moment; and sending a second data frame to a second AP at a second moment; and the first AP and the second AP maintain the same sequence number space SNS.

An index of the first data frame and the second data frame in the SNS includes: a first transmitting address and a first receiving address of a data frame; the first AP and the second AP may work on different links, and they maintain the same sequence number space SNS, and the index corresponding to the data frame is (first transmitting address, first receiving address), so that the data frame is addressed according to the index.

Embodiments of the present invention provide a method for data frame transmission, which is applicable to a station and includes: sending a first data frame to a first access point AP at a first moment; and sending a second data frame to a second AP at a second moment; and the first AP and the second AP maintain the same sequence number space SNS.

An index of the first data frame and the second data frame in the SNS includes: a first transmitting address and a first receiving address of a data frame; the first AP and the second AP may work on different links, and they maintain the same sequence number space SNS, and the index corresponding to the data frame is (first transmitting address, first receiving address), so that the data frame is addressed according to the index.

The first receiving address includes a traffic identifier (TID), which is configured to identify the same type of data streams transmitted on multiple links. For example, if an i-th position in the TID is 1, it means that data streams with a TID being the TID corresponding to the i-th bit are transmitted on multiple links. By using the TID as a receiver address, it is possible to identify whether the data receiver of the first data frame and the second data frame transmits the same type of data streams. In this way, even if the first AP and the second AP work on different links, the receiver sorts data packets with the same TID received on multiple links by SN according to the SN carried by each MSDU frame header, so as to completely receive all data frames.

Embodiments of the present invention provide a method for data frame transmission, which is applicable to a station and includes: sending a first data frame to a first AP at a first moment; and sending a second data frame to a second AP at a second moment; and the first AP and the second AP maintain the same sequence number space SNS.

An index of the first data frame and the second data frame in the SNS includes: a first transmitting address and a first receiving address of a data frame. The first AP and the second AP maintain the same sequence number space SNS, and the index corresponding to a data frame is (first transmitting address, first receiving address), the first transmitting address is a transmitter address, such as a MAC address of a transmitter; and the first receiving address is a receiver address, such as TID, so as to address the data frame according to the index.

Specifically, the index corresponding to a data frame may include the following case 1 or case 2.

### Case 1: the first receiving address includes the TID.

The first transmitting address includes a MAC address of the STA. By using the MAC address of the STA as the transmitter address, it may be determined whether data transmitters of the first data frame and the second data frame are the same STA.

As a second example, when the STA transmits data frames to multiple APs, the SNS is as shown in the following Table 1:

**Table 1:**

| SNSID (Sequence number space identifier) | SNS (Sequence number space) | Applies to | State | Multiplicity |
|---|---|---|---|---|
| SNS 13 | Individually addressed QoS Data | STA transmits data frames to multiple APs | mandatory | Indexed by (MAC/MLD MAC Address that the STA identified by Address 1 is affiliated with, TID) |

When SNSID is 13, the SNS type is individually addressed QoS data, and the applicable scenario is that STA transmits data frames to multiple APs. In this scenario, the index is (MAC/MLD MAC address that the STA identified by Address 1 is affiliated with, TID), and the MAC/MLD MAC address that the STA identified by Address 1 is affiliated with is the MAC address of the STA.

Case 2: at least two APs cooperate to transmit data to the STA, and the first transmitting address includes a first group MAC address of each AP; and the first group MAC address includes a MAC address allocated to the AP in the association process.

It may be understood that the "cooperation" in embodiments of the present invention refers to that at least two APs in two or more working states jointly perform a certain operation; for example, the first AP works on link 1 and is in working state 1; the second AP works on link 2 and is in working state 2; the first AP in the working state 1 sends data to the STA, and the second AP in the working state 2 sends data to the STA, which may be understood as "the two APs cooperatively transmit data to the STA", that is, the operation of the first AP transmitting data to the STA and the operation of the second AP transmitting data to the STA may not be performed synchronously in time.

When both the first AP (or first AP MLD1) and the second AP (or second AP MLD) transmit data frames to the STA, and an index corresponding to data frames is [first group MAC address of each AP (group AP/AP MLD MAC address), TID], where the first group MAC address refers to a specific TA address for receiving data frame within a range (i.e., group) of STA multi-switching (or roaming), which may be a MAC address allocated to the AP during a process of associating the STA with the AP.

As a second example, when the STA transmits data frames to multiple APs, the SNS is as shown in the following Table 2:

**Table 2:**

| SNSID (Sequence number space identifier) | SNS (Sequence number space) | Applies to | State | Multiplicity |
|---|---|---|---|---|
| SNS12 | Individually addressed QoS Data | Multiple APs transmit the same MSDU or A-MSDU to a counterpart (Downlink) | mandatory | Indexed by [group MAC/MLD MAC Address that the APs identified by Address 1 is affiliated with and within the group, TID] |

When SNSID is 12, the SNS type is individually addressed QoS data, and the applicable scenario is that multiple APs transmit the same MSDU or A-MSDU to the counterpart (STA). In this scenario, the index is (group MAC/MLD MAC address that the APs identified by Address 1 is affiliated with and within the group, TID), and the MAC/MLD MAC address that the APs identified by Address 1 are affiliated with is the first group MAC address of the AP.

Embodiments of the present invention provide a method for data frame transmission, which is applicable to a station and includes: sending a first data frame to a first AP at a first moment; and sending a second data frame to a second AP at a second moment; and the first AP and the second AP maintain the same sequence number space SNS.

In a case where the first data frame and the second data frame are sent to at least two APs respectively, an index of the first data frame and the second data frame in the SNS includes: a second transmitting address and a second receiving address; the second transmitting address is a transmitter address, such as a MAC address of a transmitter; and the second receiving address is a receiver address, such as a TID.

Embodiments of the present invention provide a method for data frame transmission, which is applicable to a station and includes: sending a first data frame to a first AP at a first moment; and sending a second data frame to a second AP at a second moment; and the first AP and the second AP maintain the same sequence number space SNS.

In a case where the first data frame and the second data frame are sent to at least two APs respectively, and the at least two APs correspond to the same second transmitting address and the same second receiving address; an index of the first data frame and the second data frame in the SNS further includes: a second group MAC address of each AP.

For the case with the same index (MAC address of transmitter, TID); a third identifier may be added for further indexing, i.e., the second group MAC address of each AP. The second group MAC address of each AP includes a MAC address (group AP/AP MLD MAC address) allocated to the AP associated in the association process. This address may be a MAC address allocated to the AP in the process of associating the STA with the AP, which is used to uniquely determine a specific AP.

Embodiments of the present invention provide a method for data frame transmission, which is applicable to a station and includes: sending a first data frame to a first AP at a first moment; and sending a second data frame to a second AP at a second moment; and the first AP and the second AP maintain the same sequence number space SNS.

In a case where the first data frame and the second data frame are sent to at least two APs respectively, and the at least two APs correspond to the same second transmitting address and the same second receiving address; an index of the first data frame and the second data frame in the SNS further includes: a second group MAC address of each AP.

The second transmitting address includes a MAC address of the STA; by using the MAC address of the STA as the transmitter address, it may be determined whether data transmitters of the first data frame and the second data frame are the same STA.

The second receiving address includes a MAC address of each AP on a link for receiving the data frame, to determine whether data transmitters of the first data frame and the second data frame are the same AP.

The second group MAC address of each AP includes a MAC address allocated to the AP associated in an association process.

Embodiments of the present invention provide a method for data frame transmission, which is applicable to a station and includes: sending a first data frame to a first AP at a first moment; and sending a second data frame to a second AP at a second moment; and the first AP and the second AP maintain the same sequence number space SNS.

In a case where at least two APs cooperate to transmit data to the STA, an index of the first data frame and the second data frame in the SNS includes: a third transmitting address, a third receiving address, and a MAC address allocated to the STA in an association process.

When APs are transmitters and transmit data frames to the STA at the same time, coordination is needed to make their transmissions simultaneous, and a further indexed address needs to be included, which is a MAC address allocated to the STA in the association process. A MLD MAC address of a data frame transmitted by the STA, or a unique MAC address used in switching (roaming).

Embodiments of the present invention provide a method for data frame transmission, which is applicable to a station and includes: sending a first data frame to a first AP at a first moment; and sending a second data frame to a second AP at a second moment; and the first AP and the second AP maintain the same sequence number space SNS.

In a case where at least two APs cooperate to transmit data to the STA; an index of the first data frame and the second data frame in the SNS includes: a third transmitting address, a third receiving address, and a MAC address allocated to the STA in an association process.

The third transmitting address includes a MAC address assigned to each AP in the association process to uniquely determine the AP.

The third receiving address includes TID, so that the receiver sorts data packets with the same TID received on multiple links by SN according to the SN carried in each MSDU frame header, so as to completely receive all data frames.

In embodiments of the present invention, the STA sends the first data frame to the first AP at the first moment, and sends the second data frame to the second AP at the second moment. The first AP and the second AP maintain the same sequence number space SNS, so that when the STA sends individually addressed QoS data frames to determine the sequence numbers of the QoS data frames, whether there is data frame loss may be determined according to whether the sequence numbers of the data frames are consecutive, thereby achieving seamless data transmission.

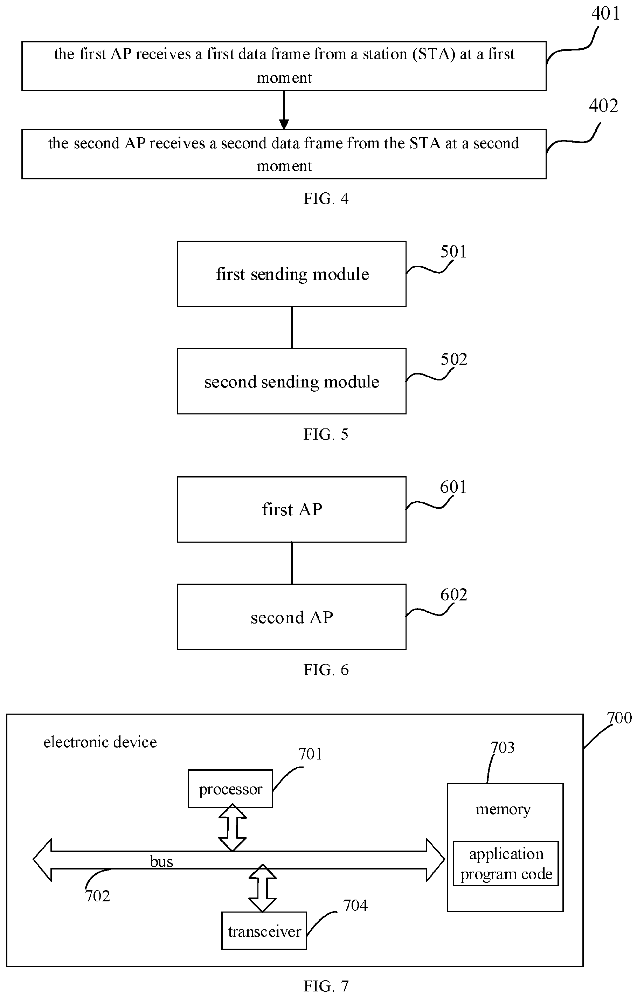

Referring to FIG. 4, embodiments of the present invention provide a method for data frame transmission. Optionally, the method is applicable to a network device, the network device may be an access point (AP) group including a first AP and a second AP, and the method includes the following steps.

In step 401, the first AP receives a first data frame from a station STA at a first moment.

In step 402, the second AP receives a second data frame from the STA at a second moment.

The first AP and the second AP maintain the same sequence number space SNS.

For the WLAN sensing architecture and the WLAN sensing process to which the method for data frame transmission according to embodiments of the present invention is applied, reference may be made to the first example mentioned above, which will not be elaborated here.

The first data frame and the second data frame may be MSDUs in the aggregation of MSDUs (A-MSDU). Specifically, MSDU is a MAC service data unit (MSDU), and usually in the medium access control (MAC) layer. Based on that the first data frame and the second data frame have the same receiver address (RA), transmitter address (TA) and service type, the first data frame and the second data frame (and other MSDUs) are aggregated into a large load to form an A-MSDU, that is, multiple MSDUs are combined into a data frame, sharing a MAC header.

Optionally, the first data frame and the second data frame may be quality of service (QoS) data frames respectively. The first moment and the second moment may be the same or different.

At the first moment, the first AP receives the first data frame; at the second moment, the second AP receives the second data frame; and the first AP and the second AP may work on different links or the same link. The first AP and the second AP maintain the same sequence number space SNS, so that for data transmission between the STA and multiple APs, one SNS is used, and sequence numbers of addressed data frames are SNs in the same sequence number space, which ensures the orderly transmission of data frames in the multi-link communication scenario.

For example, in a scenario where the STA switches communication from the first AP to the second AP, for example, when a communication state between the STA and its associated AP changes, the STA may switch the communication to another AP, so that data transmission is uninterrupted. The first AP and the second AP maintain the same sequence number space SNS, so that when the STA sends individually addressed data frames to determine sequence numbers (SNs) of the data frames, whether the SNs are consecutive may be determined according to the SNs of the data frames on links where the two APs work respectively, thereby avoiding the loss of data frames during the switching process and achieving seamless data connection.

Specifically, still taking the switching process as an example, the STA sends a first QoS data frame to the first AP, and sends a second QoS data frame to the second AP at the same time; the first QoS data frame and the second QoS data frame have the same RA, TA and service type. The STA determines the sequence number 1 of the first QoS data frame and the sequence number 2 of the second QoS data frame, and the first AP and the second AP maintain the same sequence number space SNS. In this way, when addressing, based on the same SNS, the sequence number 1 and the sequence number 2 determined on the two links are consecutive, then it is determined that there is no data frame loss during the switching process, and the STA successfully switches the communication from the first AP to the second AP. On the contrary, if the determined sequence number 1 and sequence number 2 are not consecutive, it is determined that there is data frame loss during the switching process.

In embodiments of the present invention, the first AP receives the first data frame at the first moment; the second AP receives the second data frame at the second moment. The first AP and the second AP maintain the same sequence number space SNS, so that when the STA sends individually addressed QoS data frames to determine the sequence numbers of the QoS data frames, whether there is data frame loss may be determined according to whether the sequence numbers of the data frames are consecutive, thereby achieving seamless data transmission. Embodiments of the present invention provide an implementation manner of the SNS in the multi-link scenario to support UHR.

Embodiments of the present invention provide a method for data frame transmission. Optionally, the method is applicable to an access point (AP) group including a first AP and a second AP, and the method includes: receiving, by the first AP, a first data frame from a station (STA) at a first moment; and receiving, by the second AP, a second data frame from the STA at a second moment; and the first AP and the second AP maintain the same sequence number space (SNS).

An index of the first data frame and the second data frame in the SNS includes: a first transmitting address and a first receiving address of a data frame; the first AP and the second AP may work on different links, and they maintain the same sequence number space SNS, and the index corresponding to the data frame is (first transmitting address, first receiving address), so that the data frame is addressed according to the index.

Embodiments of the present invention provide a method for data frame transmission. Optionally, the method is applicable to an access point (AP) group including a first AP and a second AP, and the method includes: receiving, by the first AP, a first data frame from a station (STA) at a first moment; and receiving, by the second AP, a second data frame from the STA at a second moment; and the first AP and the second AP maintain the same sequence number space (SNS).

An index of the first data frame and the second data frame in the SNS includes: a first transmitting address and a first receiving address of a data frame. The first receiving address includes a traffic identifier TID, which is configured to identify the same type of data streams transmitted on multiple links. For example, if an i-th position in the TID is 1, it means that data streams with a TID being the TID corresponding to the i-th bit are transmitted on multiple links. By using the TID as a receiver address, it is possible to identify whether the data receiver of the first data frame and the second data frame transmits the same type of data streams. In this way, even if the first AP and the second AP work on different links, the receiver sorts data packets with the same TID received on multiple links by SN according to the SN carried by each MSDU frame header, so as to completely receive all data frames.

Embodiments of the present invention provide a method for data frame transmission. Optionally, the method is applicable to an access point (AP) group including a first AP and a second AP, and the method includes: receiving, by the first AP, a first data frame from a station (STA) at a first moment; and receiving, by the second AP, a second data frame from the STA at a second moment; and the first AP and the second AP maintain the same sequence number space (SNS).

An index of the first data frame and the second data frame in the SNS includes: a first transmitting address and a first receiving address of a data frame.

Specifically, the index corresponding to a data frame may include the following case 1 or case 2.

Case 1: the first receiving address includes a traffic identifier TID; the TID is configured to identify the same type of data streams transmitted on multiple links. For example, if an i-th position in the TID is 1, it means that data streams with a TID being the TID corresponding to the i-th bit are transmitted on multiple links. By using the TID as a receiver address, it is possible to identify whether the data receiver of the first data frame and the second data frame transmits the same type of data streams. In this way, even if the first AP and the second AP work on different links, the receiver sorts data packets with the same TID received on multiple links by SN according to the SN carried by each MSDU frame header, so as to completely receive all data frames.

The first transmitting address includes a MAC address of the STA. By using the MAC address of the STA as the transmitter address, it may be determined whether data transmitters of the first data frame and the second data frame are the same STA.

Case 2: at least two APs cooperate to transmit data to the STA, and the first transmitting address includes a first group MAC address of each AP; and the first group MAC address includes a MAC address allocated to the AP in the association process.

When both the first AP (or first AP MLD1) and the second AP (or second AP MLD) transmit data frames to the STA, and an index corresponding to data frames is [first group MAC address of each AP (group AP/AP MLD MAC address), TID], where the first group MAC address refers to a specific TA address for receiving data frame within a range (i.e., group) of STA multi-switching (or roaming), which may be a MAC address allocated to the AP during a process of associating the STA with the AP.

Embodiments of the present invention provide a method for data frame transmission. Optionally, the method is applicable to an access point (AP) group including a first AP and a second AP, and the method includes: receiving, by the first AP, a first data frame from a station (STA) at a first moment; and receiving, by the second AP, a second data frame from the STA at a second moment; and the first AP and the second AP maintain the same sequence number space (SNS).

In a case where the first data frame and the second data frame are sent to at least two APs respectively, an index of the first data frame and the second data frame in the SNS includes: a second transmitting address and a second receiving address; the second transmitting address is a transmitter address, such as a MAC address of a transmitter; and the second receiving address is a receiver address, such as a TID.

Embodiments of the present invention provide a method for data frame transmission. Optionally, the method is applicable to an access point (AP) group including a first AP and a second AP, and the method includes: receiving, by the first AP, a first data frame from a station (STA) at a first moment; and receiving, by the second AP, a second data frame from the STA at a second moment; and the first AP and the second AP maintain the same sequence number space (SNS).

In a case where the first data frame and the second data frame are sent to at least two APs respectively, and the at least two APs correspond to the same second transmitting address and the same second receiving address; an index of the first data frame and the second data frame in the SNS further includes: a second group MAC address of each AP. The second group MAC address of each AP includes a MAC address allocated to the AP associated in the association process.

For the case with the same index (MAC address of transmitter, TID); a third identifier may be added for further indexing, i.e., the second group MAC address of each AP. The second group MAC address of each AP includes a MAC address (group AP/AP MLD MAC address) allocated to the AP associated in the association process. This address may be a MAC address allocated to the AP in the process of associating the STA with the AP, which is used to uniquely determine a specific AP.

Embodiments of the present invention provide a method for data frame transmission. Optionally, the method is applicable to an access point (AP) group including a first AP and a second AP, and the method includes: receiving, by the first AP, a first data frame from a station (STA) at a first moment; and receiving, by the second AP, a second data frame from the STA at a second moment; and the first AP and the second AP maintain the same sequence number space (SNS).

In a case where the first data frame and the second data frame are sent to at least two APs respectively, and the at least two APs correspond to the same second transmitting address and the same second receiving address; an index of the first data frame and the second data frame in the SNS further includes: a second group MAC address of each AP; and the second group MAC address of each AP includes a MAC address allocated to the AP associated in the association process.

The second transmitting address includes a MAC address of the STA; by using the MAC address of the STA as the transmitter address, it may be determined whether data transmitters of the first data frame and the second data frame are the same STA.

The second receiving address includes a MAC address of each AP on a link for receiving the data frame, to determine whether data transmitters of the first data frame and the second data frame are the same AP.

The second group MAC address of each AP includes a MAC address allocated to the AP associated in an association process.

Embodiments of the present invention provide a method for data frame transmission. Optionally, the method is applicable to an access point (AP) group including a first AP and a second AP, and the method includes: receiving, by the first AP, a first data frame from a station (STA) at a first moment; and receiving, by the second AP, a second data frame from the STA at a second moment; and the first AP and the second AP maintain the same sequence number space (SNS).

In a case where at least two APs cooperate to transmit data to the STA, an index of the first data frame and the second data frame in the SNS includes: a third transmitting address, a third receiving address, and a MAC address allocated to the STA in an association process.

When APs are transmitters and transmit data frames to the STA at the same time, coordination is needed to make their transmissions simultaneous, and a further indexed address needs to be included, which is a MAC address allocated to the STA in the association process. A MLD MAC address of a data frame transmitted by the STA, or a unique MAC address used in switching (roaming).

Embodiments of the present invention provide a method for data frame transmission. Optionally, the method is applicable to an access point (AP) group including a first AP and a second AP, and the method includes: receiving, by the first AP, a first data frame from a station (STA) at a first moment; and receiving, by the second AP, a second data frame from the STA at a second moment; and the first AP and the second AP maintain the same sequence number space (SNS).

In a case where at least two APs cooperate to transmit data to the STA; an index of the first data frame and the second data frame in the SNS includes: a third transmitting address, a third receiving address, and a MAC address allocated to the STA in an association process.

The third transmitting address includes a MAC address assigned to each AP in the association process to uniquely determine the AP.

The third receiving address includes TID, so that the receiver sorts data packets with the same TID received on multiple links by SN according to the SN carried in each MSDU frame header, so as to completely receive all data frames.

In embodiments of the present invention, the first AP receives the first data frame at the first moment; the second AP receives the second data frame at the second moment. The first AP and the second AP maintain the same sequence number space SNS, so that when the STA sends individually addressed QoS data frames to determine the sequence numbers of the QoS data frames, whether there is data frame loss may be determined according to whether the sequence numbers of the data frames are consecutive, thereby achieving seamless data transmission.

Referring to FIG. 5, based on the same principle as the method according to the embodiments of the present invention, embodiments of the present invention further provide an electronic device, and the electronic device is a station (STA) and includes a first sending module 501 and a second sending module 502.

The first sending module 501 is configured to send a first data frame to a first access point (AP) at a first moment; and
The second sending module 502 is configured to send a second data frame to a second AP at a second moment; and the first AP and the second AP maintain the same sequence number space (SNS).

Optionally, in embodiments of the present invention, an index of the first data frame and the second data frame in the SNS includes: a first transmitting address and a first receiving address of a data frame.

Optionally, in embodiments of the present invention, the first receiving address includes a traffic identifier (TID).

Optionally, in embodiments of the present invention, the first transmitting address includes a medium access control (MAC) address of the STA; or at least two APs cooperate to transmit data to the STA, and the first transmitting address includes a first group MAC address of each AP; and the first group MAC address includes a MAC address allocated to the AP in an association process.

Optionally, in embodiments of the present invention, in a case where the first data frame and the second data frame are sent to at least two APs respectively, an index of the first data frame and the second data frame in the SNS includes: a second transmitting address and a second receiving address.

Optionally, in embodiments of the present invention, in a case where the first data frame and the second data frame are sent to at least two APs respectively, and the at least two APs correspond to the same second transmitting address and the same second receiving address; an index of the first data frame and the second data frame in the SNS further includes: a second group MAC address of each AP.

Optionally, in embodiments of the present invention, the second transmitting address includes a MAC address of the STA; the second receiving address includes a MAC address of each AP in a link for receiving the data frame; and the second group MAC address of each AP includes a MAC address allocated to the AP associated in an association process.

Optionally, in embodiments of the present invention, in a case where at least two APs cooperate to transmit data to the STA; an index of the first data frame and the second data frame in the SNS includes: a third transmitting address, a third receiving address, and a MAC address allocated to the STA in an association process.

Optionally, in embodiments of the present invention, the third transmitting address includes a MAC address allocated to each AP in the association process; and the third receiving address includes a traffic identifier (TID).

Embodiments of the present invention further provide an apparatus for data frame transmission, which is applicable to a STA and includes a first data frame sending module and a second data frame sending module.

The first data frame sending module is configured to send a first data frame to a first AP at a first moment.

The second data frame sending module is configured to send a second data frame to a second AP at a second moment; and the first AP and the second AP maintain the same sequence number space (SNS).

The apparatus also includes other modules of the electronic device in the aforementioned embodiments, which will not be elaborated here.

Referring to FIG. 6, based on the same principle as the method according to the embodiments of the present invention, embodiments of the present invention further provide an electronic device, and the electronic device is an access point (AP) group and includes a first AP and a second AP.

The first AP 601 is configured to receive a first quality of service data frame from a station (STA) at a first moment.

The second AP 602 is configured to receive a second data frame from the STA at a second moment; and the first AP and the second AP maintain the same sequence number space (SNS).

Optionally, in embodiments of the present invention, an index of the first data frame and the second data frame in the SNS includes: a first transmitting address and a first receiving address of a data frame.

Optionally, in embodiments of the present invention, the first receiving address includes a traffic identifier (TID).

Optionally, in embodiments of the present invention, the first transmitting address includes a MAC address of the STA; or at least two APs cooperate to transmit data to the STA, and the first transmitting address includes a first group MAC address of each AP; and the first group MAC address includes a MAC address allocated to the AP in an association process.

Optionally, in embodiments of the present invention, in a case where the first data frame and the second data frame are sent to at least two APs respectively, an index of the first data frame and the second data frame in the SNS includes: a second transmitting address and a second receiving address.

Optionally, in embodiments of the present invention, in a case where the first data frame and the second data frame are sent to at least two APs respectively, and the at least two APs correspond to the same second transmitting address and the same second receiving address; an index of the first data frame and the second data frame in the SNS further includes: a second group MAC address of each AP.

Optionally, in embodiments of the present invention, the second transmitting address includes a MAC address of the STA; the second receiving address includes a MAC address of each AP in a link for receiving the data frame; and the second group MAC address of each AP includes a MAC address allocated to the AP associated in an association process.

Optionally, in embodiments of the present invention, in a case where at least two APs cooperate to transmit data to the STA; an index of the first data frame and the second data frame in the SNS includes: a third transmitting address, a third receiving address, and a MAC address allocated to the STA in an association process.

Optionally, in embodiments of the present invention, the third transmitting address includes a MAC address allocated to each AP in the association process; and the third receiving address includes a TID.

Embodiments of the present invention further provide an apparatus for data frame transmission, which is applicable to an electronic device, and the electronic device is an access point (AP) group and including a first AP and a second AP.

The apparatus includes a first receiving module and a second receiving module.

The first receiving module is configured to control the first AP to receive a first quality of service data frame from a station (STA) at a first moment.

The second receiving module is configured to control the second AP to receive a second data frame from the STA at a second moment; and the first AP and the second AP maintain the same sequence number space (SNS).

The apparatus also includes other modules of the electronic device in the aforementioned embodiments, which will not be elaborated here.

In an optional embodiment, the embodiment of the present invention further provides an electronic device, as shown in FIG. 7. The electronic device 700 shown in FIG. 7 may be a server, including a processor 701 and a memory 703. The processor 701 and the memory 703 are connected, for example, via a bus 702. Optionally, the electronic device 700 may further include a transceiver 704. It should be noted that in actual applications, the number of the transceivers 704 is not limited to one, and the structure of the electronic device 700 does not constitute a limitation on the embodiments of the present invention.

The processor 701 may be a central processing unit (CPU), a general-purpose processor, a digital signal processor (DSP), an application specific integrated circuit (ASIC), a field programmable gate array (FPGA), or other programmable logic devices, transistor logic devices, hardware components, or any combination thereof. The processor 701 may implement or execute various exemplary logical blocks, modules, and circuits described in conjunction with the contents of the present invention. The processor 701 may also be a combination that implements computing functions, such as a combination of one or more microprocessors, a combination of a DSP and a microprocessor, etc.

The bus 702 may include a path to transmit information between the above components. The bus 702 may be a peripheral component interconnect (PCI) bus, an extended industry standard architecture (EISA) bus, or the like. The bus 702 can be divided into an address bus, a data bus, a control bus, etc. For ease of representation, FIG. 7 illustrates only one thick line to represent the bus 702, but this does not mean that there is only one bus or one type of bus.

The memory 703 may be a read only memory (ROM) or other types of static storage devices that may store static information and instructions, or a random access memory (RAM) or other types of dynamic storage devices that may store information and instructions; and the memory 703 may also be an electrically erasable programmable read only memory (EEPROM), a compact disc read only memory (CD-ROM), or other optical disk storage media or optical disc storage media (including a compressed optical disk, a laser disk, an optical disk, a digital versatile disk, a Blu-ray disk, etc.), a magnetic disk storage medium or other magnetic storage devices, or any other medium that may be used to carry or store the desired program codes in the form of instructions or data structures and may be accessed by a computer, but is not limited thereto.

The memory 703 is configured to store application program codes for executing the solution of the present invention, and the execution is controlled by the processor 701. The processor 701 is used to execute the application program codes stored in the memory 703 to implement the contents shown in the aforementioned method embodiments.

The electronic device includes, but is not limited to: a mobile terminal such as a mobile phone, a laptop, a digital broadcast receiver, a personal digital assistant (PDA), a tablet computer (PAD), a portable multimedia player (PMP), a vehicle-mounted terminal (such as a vehicle-mounted navigation terminal), etc.; and a fixed terminal such as a digital television (TV), a desktop computer, etc. The electronic device shown in FIG. 7 is merely an example and should not limit the functions and use scope of the embodiments of the disclosure in any way.

The server provided in the present invention may be an independent physical server, a server cluster or a distributed system composed of a plurality of physical servers, or a cloud server that provides basic cloud computing services such as cloud services, cloud databases, cloud computing, cloud functions, cloud storage, network services, cloud communications, middleware services, domain name services, security services, content distribution network (CDN), as well as big data and artificial intelligence platforms. The terminal may be a smart phone, a tablet computer, a laptop computer, a desktop computer, a smart speaker, a smart watch, etc., but is not limited thereto. The terminal and the server may be connected directly or indirectly via wired or wireless communication, which is not limited in the present invention.

An embodiment of the present invention provides a computer-readable storage medium, on which a computer program is stored. When the computer program runs on a computer, the computer may execute the corresponding contents in the aforementioned method embodiments.

It should be understood that, although the steps in the flowcharts of the accompanying drawings are displayed sequentially as indicated by the arrows, these steps are not necessarily executed sequentially in an order indicated by the arrows. Unless otherwise specified herein, there is no strict order limitation for the execution of these steps, and these steps may be executed in other orders. Moreover, at least some of the steps in the flowcharts of the accompanying drawings may include a plurality of sub-steps or a plurality of stages. These sub-steps or stages are not necessarily executed at the same time, but may be executed at different times. The order of execution of these steps is not necessarily sequential, but these steps may be executed in turn or alternately with other steps or at least some of sub-steps or stages of other steps.

It should be noted that the above-mentioned computer-readable medium in the present invention may be a computer-readable signal medium, or a computer-readable storage medium, or any combination of the above two media. The computer-readable storage medium may be, for example, but is not limited to, an electronic, magnetic, optical, electromagnetic, infrared, or semiconducting system, apparatus, or device, or any combination of the foregoing. The more specific examples of the computer-readable storage medium may include, but are not limited to, an electrical connection having one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the foregoing. In the present invention, the computer-readable storage medium may be any tangible medium that contains or stores a program for use by or in connection with an instruction execution system, apparatus, or device. In the present invention, the computer-readable signal medium may include a data signal propagated in a baseband or as a part of a carrier wave, in which computer-readable program codes are carried. Such a propagated data signal may take a variety of forms, including but not limited to electromagnetic signals, optical signals, or any suitable combination of the foregoing. The computer-readable signal medium may also be any computer-readable medium other than computer-readable storage media, which may send, propagate or transport a program for use by or in conjunction with an instruction execution system, apparatus or device. The program code embodied on the computer-readable medium may be transmitted using any appropriate medium, including but not limited to: a wire, an optical cable, a radio frequency (RF), or the like, or any suitable combination of the foregoing.

The above-mentioned computer-readable medium may be included in the above-mentioned electronic device, or may exist independently without being incorporated into the electronic device.

The above-mentioned computer-readable medium carries one or more programs. When the one or more programs are executed by the electronic device, the electronic device executes the method shown in the above embodiments.

According to one aspect of the present invention, a computer program product or a computer program is provided, including computer instructions stored in a computer-readable storage medium. A processor of a computer device reads the computer instructions from the computer-readable storage medium and executes the computer instructions, so that the computer device executes the method in the above various optional implementations.

The computer program codes for performing operations in the present invention may be written in one or more programming languages or their combination, including object-oriented programming languages such as Java, Smalltalk, C++, or conventional procedural programming languages such as "C" language or similar programming languages. The program codes may be executed entirely on a user computer, partly on the user computer, as a stand-alone software package, partly on the user computer and partly on a remote computer, or entirely on the remote computer or a server. In case of involving a remote computer, the remote computer may be connected to the user computer through any type of network, including a local area network (LAN) or a wide area network (WAN), or may be connected to an external computer (e.g., through the Internet using an Internet service provider).

The flowcharts and block diagrams in the accompanying drawings illustrate possibly implemented architectures, functions, and operations of systems, methods, and computer program products according to various embodiments of the present invention. In this regard, each block in the flowchart or block diagram may represent a module, a program segment, or a portion of code, which contains one or more executable instructions for implementing the specified logical functions. It should also be noted that, in some alternative implementations, the functions noted in the block may occur out of the order noted in the drawings. For example, two blocks shown in succession may actually be executed substantially in parallel, or they may sometimes be executed in the reverse order, depending on the functionality involved. It should also be noted that each block in the block diagram and/or flowchart, and a combination of blocks in the block diagram and/or flowchart, may be implemented by a dedicated hardware-based system that performs the specified functions or operations, or may be implemented by a combination of dedicated hardware and computer instructions.

The modules described and involved in the embodiments of the present invention may be implemented in software or hardware. The name of a module does not, in some cases, constitute a limitation on the module itself. For example, module A may also be described as "module A for performing operation B".

The above describes preferred embodiments of the present invention and the technical principles used. Those skilled in the art should understand that the scope of disclosure involved in the present invention is not limited to the technical solutions formed by a specific combination of the above-mentioned technical features, but should also cover other technical solutions formed by any combination of the above-mentioned technical features or their equivalent features without departing from the above-mentioned concepts of the present invention. For example, the above-mentioned features are replaced with the technical features with similar functions disclosed in the present invention (but not limited to this) to form a technical solution.

## Claims

1. A method for data frame transmission, applicable to a station (STA), comprising:
sending a first data frame to a first access point (AP) at a first moment; and
sending a second data frame to a second AP at a second moment; wherein the first AP and the second AP maintain a same sequence number space (SNS).

2. The method for data frame transmission according to claim 1, wherein an index of the first data frame and the second data frame in the SNS includes: a first transmitting address and a first receiving address of a data frame.

3. The method for data frame transmission according to claim 2, wherein the first receiving address includes a traffic identifier (TID).

4. The method for data frame transmission according to claim 2 or 3, wherein the first transmitting address includes a medium access control (MAC) address of the STA; or
at least two APs cooperate to transmit data to the STA, and the first transmitting address includes a first group MAC address of each AP; and the first group MAC address includes a MAC address allocated to the AP in an association process.

5. The method for data frame transmission according to any one of claims 1 to 4, wherein in a case where the first data frame and the second data frame are sent to at least two APs respectively, an index of the first data frame and the second data frame in the SNS includes: a second transmitting address and a second receiving address.

6. The method for data frame transmission according to any one of claims 1 to 4, wherein in a case where the first data frame and the second data frame are sent to at least two APs respectively, and the at least two APs correspond to a same second transmitting address and a same second receiving address; an index of the first data frame and the second data frame in the SNS further includes: a second group MAC address of each AP.

7. The method for data frame transmission according to claim 6, wherein
the second transmitting address includes a MAC address of the STA;
the second receiving address includes a MAC address of each AP in a link for receiving the data frame;
the second group MAC address of each AP includes a MAC address allocated to the AP associated in an association process.

8. The method for data frame transmission according to any one of claims 1 to 4, wherein in a case where at least two APs cooperate to transmit data to the STA; an index of the first data frame and the second data frame in the SNS includes: a third transmitting address, a third receiving address, and a MAC address allocated to the STA in an association process.

9. The method for data frame transmission according to claim 8, wherein the third transmitting address includes a MAC address allocated to each AP in the association process; and
the third receiving address includes a traffic identifier (TID).

10. A method for data frame transmission, applicable to an access point (AP) group comprising a first AP and a second AP, comprising:
receiving, by the first AP, a first data frame from a station (STA) at a first moment; and
receiving, by the second AP, a second data frame from the STA at a second moment;
wherein the first AP and the second AP maintain a same sequence number space (SNS).

11. The method for data frame transmission according to claim 10, wherein an index of the first data frame and the second data frame in the SNS includes: a first transmitting address and a first receiving address of a data frame.

12. The method for data frame transmission according to claim 11, wherein the first receiving address includes a traffic identifier (TID).

13. The method for data frame transmission according to claim 11 or 12, wherein the first transmitting address includes a medium access control (MAC) address of the STA; or
at least two APs cooperate to transmit data to the STA, and the first transmitting address includes a first group MAC address of each AP; and the first group MAC address includes a MAC address allocated to the AP in an association process.

14. The method for data frame transmission according to any one of claims 10 to 13, wherein in a case where the first data frame and the second data frame are sent to at least two APs respectively, an index of the first data frame and the second data frame in the SNS includes: a second transmitting address and a second receiving address.

15. The method for data frame transmission according to any one of claims 10 to 13, wherein in a case where the first data frame and the second data frame are sent to at least two APs respectively, and the at least two APs correspond to a same second transmitting address and a same second receiving address; an index of the first data frame and the second data frame in the SNS further includes: a second group MAC address of each AP.

16. The method for data frame transmission according to claim 15, wherein
the second transmitting address includes a MAC address of the STA;
the second receiving address includes a MAC address of each AP in a link for receiving the data frame;
the second group MAC address of each AP includes a MAC address allocated to the AP associated in an association process.

17. The method for data frame transmission according to any one of claims 10 to 13, wherein in a case where at least two APs cooperate to transmit data to the STA; an index of the first data frame and the second data frame in the SNS includes: a third transmitting address, a third receiving address, and a MAC address allocated to the STA in an association process.

18. The method for data frame transmission according to claim 17, wherein the third transmitting address includes a MAC address allocated to each AP in the association process; and
the third receiving address includes a traffic identifier (TID).

19. An electronic device, as a station (STA), comprising:
a first sending module, configured to send a first data frame to a first access point (AP) at a first moment; and
a second sending module, configured to send a second data frame to a second AP at a second moment; wherein the first AP and the second AP maintain a same sequence number space (SNS).

20. An electronic device, as an access point (AP) group, comprising a first AP and a second AP, wherein
the first AP is configured to receive a first quality of service data frame from a station (STA) at a first moment; and
the second AP is configured to receive a second data frame from the STA at a second moment;
wherein the first AP and the second AP maintain a same sequence number space (SNS).

21. An electronic device, comprising:
a memory,
a processor, and
computer programs stored in the memory and executable on the processor,
wherein when the processor executes the programs, the method according to any one of claims 1 to 9 or the method according to any one of claims 10 to 18 is implemented.

22. A computer-readable storage medium having stored therein computer programs that, when executed by a processor, cause the method according to any one of claims 1 to 9 or the method according to any one of claims 10 to 18 to be implemented.
